Europäisches Patentamt

European Patent Office

Office européen des brevets

(11) Publication number: **0 215 336 B1**

## EUROPEAN PATENT SPECIFICATION

(45) Date of publication of patent specification: **05.02.92**

(51) Int. Cl.5: **C01B 25/36**, B01J 27/16, C08F 4/02, C08F 10/02, //B01J35/10

(21) Application number: **86111696.0**

(22) Date of filing: **23.08.86**

The file contains technical information submitted after the application was filed and not included in this specification

(54) **High pore volume aluminum phosphate.**

(30) Priority: **29.08.85 US 770550**

(43) Date of publication of application:
**25.03.87 Bulletin 87/13**

(45) Publication of the grant of the patent:
**05.02.92 Bulletin 92/06**

(84) Designated Contracting States:
**AT BE CH DE FR GB IT LI LU NL SE**

(56) References cited:
**EP-A- 0 056 164      EP-A- 0 090 374
FR-A- 2 323 702      US-A- 3 342 750
US-A- 4 066 572      US-A- 4 385 994**

**CHEMICAL ABSTRACTS, vol. 86, no. 6, 7th February 1977, page 507, abstract no. 37051u, Columbus, Ohio, US; N.V. GREBEN'KO et al.: "Synthesis and study of porous aluminophosphates", & ZH. NEORG. KHIM. 1976, 21(10), 2660-4**

(73) Proprietor: **W.R. Grace & Co.-Conn. (a Connecticut corp.)
Grace Plaza 1114 Avenue of the Americas
New York New York 10036(US)**

(72) Inventor: **Rimantas, Glemza
2100 Chatilla Road
Baltimore Maryland 21228(US)**

(74) Representative: **UEXKÜLL & STOLBERG Patentanwälte
Beselerstrasse 4
W-2000 Hamburg 52(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

BACKGROUND OF THE INVENTION

This invention is for aluminum phosphate compositions which are characterized by having both high pore volumes and phosphorus-to-aluminum (hereinafter "P/Al") ratios in the range of 0.8 to 1.0. These compositions are useful as cracking catalysts, supports for ethylene polymerization catalysts, flatting agents, carriers, adsorbents and thickeners.

Synthetic aluminum phosphates are known and the utility and properties of various compositions have been discussed extensively in the literature. For example, Kerby, 2nd Int'l Congress and Catalysis, "New AlPO$_4$ Gels As Acid Catalysts," pp. 2567-79 (1960, Paris) and Moffat, Catal. Rev. - Sci. Eng., "Phosphates As Catalysts," Vol. 19, pp. 199-258 (1978) discuss the properties of various aluminum phosphates, reporting surface areas of about 200.0 to 500.0 m$^2$/gm and pore volumes (hereinafter "PV") of about 0.45 to 0.78 cc/gm. Aluminum phosphate-containing compositions also have been described, as in U.S. 3,904,550 (Pine) which discloses a catalyst support comprised of alumina and aluminum phosphate with P/Al = 0.54 and PV = 1.34 cc/gm; U.S. 4,210,560 (Kehl) which discloses magnesia-alumina-AlPO$_4$ catalyst supports with P/Al = 0.21 and PV = 1.11 cc/gm or with P/Al = 0.69 and PV = 0.72 cc/gm; and Marcelin et al., J. of Catal., "Alumina-Aluminum Phosphate As Large-Pore Support and Its Application to Liquid Phase Hydrogenation," Vol. 83, pp. 42-49 (1983) which discloses alumina-aluminum phosphate supports with P/Al = 1.0 and PV = 0.32 cc/gm or with P/Al = 0.5 and PV = 0.64 cc/gm.

US 3 342 750 discloses compositions containing stable aluminum phosphate gel, wherein the P/Al ratio is near 1, however, they have high surface areas in combination with relatively low pore diameters.

The prior art compositions all share the same limitation. As the P/Al approaches unity, the pore volume of the prior art compositions decreases or the surface area increases. It previously has not been reported that an aluminum phosphate composition could be prepared with these characteristics: a P/Al between 0.8 to 1, a high pore volume of at least 1.0 cc/gm and a surface area between 300 to 408 m$^2$/g. The composition of the invention achieves this combination of properties.

SUMMARY OF THE INVENTION

The compositions defined and described herein are aluminum phosphate compounds with a unique combination of properties. These aluminum phosphates are characterized by high porosity, with pore volumes of at least 1.0, preferably at least 1.3 cc/gm. At the same time, the ratio of phosphorus to aluminum in the compositions is in the range of 0.8 to 1.0. The surface area is in the range of 300 to 408 m$^2$/gm.

It is the primary object of this invention to provide stoichiometric aluminum phosphates with high porosity. Compositions of this description find particular utility when used as cracking catalysts or as supports for polymerization catalysts. A related object is to provide polymerization catalysts in which the catalytically active ingredients either are incorporated into the aluminum phosphate support of this invention by cogelling or by post-impregnation. It is also an object to provide high pore volume aluminum phosphates which are useful as flatting agents, flavor carriers, adsorbents and thickeners.

DETAILED DESCRIPTION OF THE INVENTION

The compositions of this invention comprise aluminum phosphate in which phosphorus and aluminum are present in a ratio in the range of 0.8 to 1.0. The described aluminum phosphates are further characterized by high porosity and high surface areas. The compositions are thermostable up to at least 700°C and are further characterized by a lack of crystallinity, that is, they will remain amorphous, even at temperatures in that vicinity. These properties make the aluminum phosphates of this invention ideal for catalyst applications.

The aluminum phosphates of this invention are conveniently prepared by the following method, although variations or other methods may be suitable. The compositions may be made by neutralization of an acidic aqueous solution of aluminum and phosphate ions. Suitable solutions may be formed from aluminum salts and phosphate salts. The aluminum salts may be aluminum nitrate (Al(NO$_3$)$_3$.9H$_2$O), aluminum chloride hydrate (AlCl$_3$.6H$_2$O), aluminum bromide (AlBr$_3$.6H$_2$O), aluminum bromate (Al(BrO$_3$)$_3$.9H$_2$O), aluminum chlorate (Al(ClO$_3$)$_3$.6H$_2$O), or aluminum iodide hydrate (AlI$_3$.6H$_2$O). The phosphate salts may be orthophosphoric acid (H$_3$PO$_4$), ammonium phosphate (NH$_4$H$_2$PO$_4$), ammonium phosphate, dibasic ((NH$_4$)$_2$HPO$_4$) or other soluble alkali phosphates. The preferred salts are aluminum nitrate and ammonium phosphate. The aluminum phosphate solution is formed by dissolving the selected salts, in a P/Al of approximately 1.0, in water, heating as necessary to form a solution. The solution is then cooled. For reasons of economy, ambient temperatures are preferred for the preparation of the hydrogel, but the composition may be kept warmer or cooler if desired.

A hydrogel is prepared by partially neutralizing the acidic aqueous solution and gelling the partially neutralized composition. Neutralization to 90-100% is preferred, although the calculated percent neutralization may be somewhat over 100%. The pH of the partially neutralized composition is not critical but it should be kept low enough to avoid precipitation. The quantity of base used in this step is calculated from the stoichiometry of the reaction, for example, for the conversion of all nitrate to $NH_4NO_3$. Ammonium hydroxide, preferably 30% ammonia, is conveniently used for neutralization. The base is added to the aqueous aluminum phosphate solution slowly, to avoid formation of a precipitate, and with vigorous agitation. The partially neutralized solution, now a vicous mass, forms a hydrogel at ambient temperatures. Typically, after about 3.0 hours the gel is firm enough to be handled in the subsequent processing steps.

The resulting aluminum phosphate hydrogel is subjected to a second neutralization. The hydrogel, which may be cut into chunks or pieces for ease in handling, is soaked in an aqueous basic solution. The basic solution must be of sufficient volume to cover the hydrogel and of sufficient strength to yield an end pH of about 8.0 to 9.0. Ammonium hydroxide is preferred, although sodium hydroxide also may be used. The hydrogel is removed from the soak solution and washed thoroughly with hot dilute base, such as ammonium hydroxide or ammonium carbonate, dibasic. It is preferred to use ammonium hydroxide (pH 10.0) at about 60.0 to 90.0°C, preferably about 85.0°C, in a continuous flow-through system, washing for about 10.0 to 30.0 hours.

The washed hydrogel is then exchanged with any alcohol soluble in water, or with acetone or ethyl acetate, in several soak/drain steps, for example, about 6-8 soak/drain repetitions. Alternatively, the washed hydrogel may be exchanged with heavier alcohols, such as n-hexanol, followed by azeotropic distillation. The hydrogel is then dried to the desired total volatiles (TV) content, which will depend on the particular use intended for the aluminum phosphate composition.

Aluminum phosphate compositions prepared in this manner can be expected to have the following characteristics: The total pore volume (PV) will be at least 1.0 cc/gm, and preferably about 1.3 to 1.6 cc/gm. The surface area (SA), measured by the nitrogen Brunauer-Emmett-Teller (BET) surface area method described in Brunauer et al., J. Am. Chem. Soc., Vol. 60, p.309 (1938), range from about 300.0 to 408.0 $m^2$/gm. Other characteristics of these compositions are typical of aluminum phosphates in general.

It is expected that the improved aluminum phosphate compositions of this invention will find utility where conventional aluminum phosphates are used, with the added advantages of their high porosity. For example, the compositions may be used as cracking catalysts after sizing to an average of about 80.0 to 100.0 microns, then heating to about 1000.0°F (538.0°C) to remove all ammonia. For use as flatting agents, carriers or thickeners, the compositions are sized to about 1.0 to 20.0 microns, as desired, and typically are used at about 10.0% TV. The compositions also are useful as supports for polymerization catalysts.

Where the compositions are used as supports for polymerization catalysts, the catalytically active agent, i.e., chromium, may be added either by incorporation into the aluminum phosphate gel or by impregnation on the formed support composition. In addition to chromium, other promoters such as boron, silicon or titanium may be present. The active agent or agents may be added initially to the aqueous solution of aluminum and phosphate ions in order to form a cogel with the aluminum phosphate or may be added to the aluminum phosphate material by post-impregnation.

For post-impregnation of the catalytically active agent, the aluminum phosphate supports may be prepared as described above and then impregnated with the desired agent or agents. For example, the dried aluminum phosphate support material may be soaked in a solution of catalyst material (i.e., an aqueous solution of $Cr(NO_3)_3.9H_2O$) and then dried. Typically, about 1.0 to about 5.0% chromium on a total solids basis is used. Any convenient soluble chromium salt may be used, provided that the pH of the solution should not be low enough (i.e., pH less than about 3.0) to dissolve aluminum from the aluminum phosphate composition. In addition, it may be desired to add boron, silicon or titanium. Alternatively, the catalytically active agent or agents may be incorporated into the aluminum phosphate material itself by cogelling. In this embodiment, the agent is added to the initial solution containing aluminum and phosphate ions. For example, chromic nitrate $(Cr(NO_3)_3.9H_2O)$ may be dissolved in the initial aqueous solution. The catalytically active aluminum phosphate cogel is then prepared according to the procedures described above.

The examples which follow are given for illustrative purposes and are not meant to limit the invention described herein. The following abbreviations have been used throughout in describing the invention:

AlPO$_4$ = aluminum phosphate
BET = Brunauer-Emmett-Teller
°C = degrees Centigrade
cc = cubic centimeter(s)
conc = concentrated
gm = gram(s)
hr = hour(s)
m$^2$ = square meter(s)
min = minute(s)
P/Al = phosphorus-to-aluminum ratio
PV = pore volume
% = percent
SA = surface area
TV = total volatiles
vol = volume
wt = weight

EXAMPLE I

The following ingredients were added to a beaker and heated to about 80°C: 1,237.5 gm Al(NO$_3$)$_3$.9H$_2$O and 198.0 gm H$_2$O. After forming a complete solution, the mixture was stirred and 342.0 gm NH$_4$H$_2$PO$_4$ were dissolved in it. The solution was allowed to cool to ambient temperature. The calculated P/Al ratio was 0.90.

First Neutralization - Next, 538.6 gm of the cooled solution were added to a Waring blender and 127.0 cc of concentrated NH$_4$OH (30% NH$_3$) were added slowly (over 39.0 min) with vigorous agitation. The resulting viscous mass was transferred to a beaker and allowed to stand overnight to gel. The calculated percent neutralization (to NH$_4$NO$_3$) was 96.0%, and the calculated final solids content as AlPO$_4$ + Al$_2$O$_3$ was 17.6%.

Second Neutralization - The aluminum phosphate hydrogel was cut into chunks (about 2.54 cm (1.0 inch)) and 514.5 gm of chunks were transferred to another beaker, covered with a water solution containing 65.0 cc concentrated NH$_4$OH and allowed to stand overnight. The soak solution (final pH of 8.5) was decanted and the hydrogel transferred to another container for washing.

Washing - The hydrogel was washed in a continuous flow-through system with 85°C dilute NH$_4$OH (pH 10.0) for 19 hours. The washed hydrogel was then exchanged with acetone in seven soak/drain steps, and dried overnight in a vacuum oven at 145°C. The final product was found to have the following properties:

| | |
|---|---|
| TV (at 1750°F) = | 12.3% |
| PV = | 1.43 cc/gm |
| BET SA = | 380.0 m$^2$/gm |

EXAMPLE II

The procedures of Example I were followed, with the following differences:

Initial Ingredients:

| | |
|---|---|
| Al(NO$_3$)$_3$.9H$_2$O | 1200.0 gm |
| Cr(NO$_3$)$_3$.9H$_2$O | 57.6 gm |
| NH$_4$H$_2$PO$_4$ | 331.3 gm |
| H$_2$O | 192.0 gm |
| Calculated P/Al | 0.90 |
| Calculated p/(Al + Cr) | 0.86 |

4

First Neutralization:

| | |
|---|---|
| Wt. of solution | 556.5 gm |
| Vol. conc $NH_4OH$ | 133.5 cc |
| Time of Addition | 44.0 min |
| Calculated % neutr. | 95.0% |
| Calculated final solids | 17.5% |

Second Neutralization:

| | |
|---|---|
| Wt. hydrogel chunk | 566.5 gm |
| Conc $NH_4OH$ in soak | 70.0 cc |
| Final pH of soak | 8.2 |

Washing:

```
Time                            21.0 hr
Exchanged with ethanol in
   eight soak/drain steps
Vacuum oven                   114.0°C
```

Product Analysis:

| | |
|---|---|
| TV = | 12.8% |
| PV = | 1.25 cc/gm |
| BET SA = | 395.0 m$^2$/gm |
| Cr = | 2.2% |

EXAMPLE III

The procedures of Example I were followed with the indicated differences. The first solution was divided into three portions and to each portion additional ingredients were added before the first neutralization in order to vary the P/Al.

Initial Ingredients:

| | |
|---|---|
| $Al(NO_3)_3 \cdot 9H_2O$ | 1200.0 gm |
| $NH_4H_2PO_4$ | 368.0 gm |
| $H_2O$ | 144.0 gm |

| Divided Solution: | A | B | C |
|---|---|---|---|
| Wt. of Solution (gm) | 535.0 | 535.00 | 535.0 |
| Extra $H_2O$ (cc) | 15.0 | 5.00 | 0.0 |
| Extra $Al(NO_3)_3.9H_2O$ (gm) | 0.0 | 15.00 | 41.6 |
| Calculated P/Al | 1.0 | 0.96 | 0.9 |

| First Neutralization: | A | B | C |
|---|---|---|---|
| Vol. conc $NH_4OH$ (cc) | 132.5 | 146.0 | 157.5 |
| Time of Addition (min) | 38.0 | 42.0 | 36.0 |
| Gel pH | 2.6 | -- | -- |
| Calc. % neutr. | 105.0 | 109.0 | 107.0 |
| Calculated final solids | 18.2% | 18.1% | 17.8% |

| Second Neutralization: | A | B | C |
|---|---|---|---|
| Aging (hr.)* | 4.0 | 4.0 | 3.0 |
| Wt. chunks (gm) | 556.0 | 596.0 | 631.0 |
| Conc $NH_4OH$ in soak (cc) | 65.0 | 70.0 | 75.0 |
| Final pH of soak | 8.4 | 8.4 | 8.4 |

\* Time between First and Second Neutralizations

Washing:

| Time | 26.0 hrs |
|---|---|

Exchanged with ethanol as
   in Example II.

| Vacuum oven | 168.0°C |
|---|---|

| Product Analysis: | A | B | C |
|---|---|---|---|
| Calculated P/Al | 1.00 | 0.96 | 0.90 |
| TV(%) | 15.30 | 13.20 | 16.70 |
| PV (cc/gm) | 1.43 | 1.45 | 1.44 |
| BET SA ($m^2$/gm) | 348.00 | 378.00 | 408.00 |

EXAMPLE IV

The procedures of Example I were followed, with the indicated differences. The first solution was divided into four portions, with the speed of addition of $NH_4OH$ in the First Neutralization differing for each portion.

Initial Ingredients:

6

| Al(NO$_3$)$_3$.9H$_2$O | 1604.4 gm |
|---|---|
| NH$_4$H$_2$PO$_4$ | 483.0 gm |
| H$_2$O | 189.0 gm |
| Calc P/Al | 0.98 |

| First Neutralization: | A | B | C | D |
|---|---|---|---|---|
| Wt. of Soln. (gm) | 542.0 | 542.0 | 542.0 | 542.0 |
| Vol. conc NH$_4$OH (cc) | 124.0 | 125.0 | 125.0 | 122.0 |
| Time of Addition (min) | 42.0 | 35.0 | 31.0 | 34.0 |
| Gel pH | 3.0 | -- | -- | -- |
| Calculated % solids | 18.8 | 18.8 | 18.8 | 18.8 |
| Calc. % neutr. | 96.0 | 97.0 | 97.0 | 94.0 |

| Second Neutralization: | A | B | C | D |
|---|---|---|---|---|
| Aging (hr.) | 4.0 | 4.0 | 4.0 | 4.0 |
| Wt. chunks (gm) | 543.0 | 549.0 | 572.0 | 555.0 |
| Conc NH$_4$OH in soak (cc) | 70.0 | 70.0 | 70.0 | 70.0 |
| Final pH of soak | 9.1 | 9.1 | 9.0 | 9.1 |

Washing:

The four portions were washed as in Example I for 24 hours, exchanged with ethanol as in Example II and then combined into one batch which was dried overnight in a vacuum oven at 196°C.

Product Analysis:

| Calc. P/Al = | 0.98 |
|---|---|
| TV(%) = | 12.60 |
| PV (cc/gm) = | 1.53 |
| BET SA (m$^2$gm) = | 363.00 |

EXAMPLE V

This Example demonstrates the utility of catalysts prepared from the materials made in Examples II and III(B) for the polymerization of ethylene. The material from Example II already contained chromium as the catalytically active ingredient, incorporated by co-gelling. The second catalyst was prepared from product B of Example III by post-impregnation with chromium by wetting 46.0 gm of product III(B) with 64.0 cc of a Cr(NO$_3$)$_3$ solution (0.672% Cr) in 70% isopropanol to incipient wetness, followed by drying in a vacuum oven for 15 hours at 167.0°C. Both catalysts were used in powder form, after pestling and screening through an 0.77 mm (80 mesh) screen.

For each catalyst preparation, about 30.0 cc of freshly prepared catalyst was fluidized in a 4.5 cm (diameter) quartz tube having a sintered frit to support the sample. The fluidizing medium was air, predried to less than (-100.0°F) -73.0°C dew point by passage through activated silica gel and alumina beds. The fluidized bed was heated at the rate of 400°C/hour to 705°C and kept at that temperature for five hours. After activation, the quartz tube with the sample was cooled to ambient temperature and the activated catalyst was transferred to a glass container for storage. All handling of the activated material was done under nitrogen.

Evaluation of the activated catalysts for ethylene polymerization activity was done at 101 to 103°C in a two-liter stirred autoclave. Temperature was held constant to within 0.5°C by adjusting the pressure of boiling methanol in the jacket surrounding the reactor. After heating the nitrogen-filled reactor to about 102°C, about 0.05 gm activated catalyst was charged under nitrogen blanket, followed by about 1.0 liter liquid isobutane purified through activated charcoal and alumina columns. Stirring was begun and ethylene was supplied on demand to maintain 3792 KPa (550.0 psig). Under these conditions, the polyethylene product does not dissolve in the isobutane but remains in slurry form. After the reactor was pressurized, 7.4 cc 1-hexene were added and the reaction was allowed to proceed. It was terminated by venting off isobutane and excess ethylene from the reactor. The conditions and results of the two tests are as follows:

|  | Catalyst II | Catalyst III(B) |
|---|---|---|
| Reaction temperature (°C) | 101.0 | 103.0 |
| Catalyst wt (gm) | 0.064 | 0.055 |
| Reaction time (min) | 164.0 | 90.0 |
| Polyethylene (gm) | 224.0 | 57.0 |
| Melt Index [1] | 0.01 | -- |
| High Load Melt Index[2] | -- | 8.9 |

[1] - ASTM Proc. D1238-79, Cond. E, Proc. A.
[2] - ASTM Proc. D1238-79, Cond. F, Proc. B.

The results demonstrate that both aluminum phosphate supports tested yield polymerization catalysts which can produce large quantities of polyethylene in short reaction times.

**Claims**

**1.** An amorphous and highly porous aluminum phosphate composition in which phosphorus and aluminum are present in a ratio in the range of 0.8 to 1.0 and which has a surface area in the range of 300 to 408 $m^2/g$ and a total pore volume of at least 1.0 $cm^3/g$.

**2.** A composition of claim 1 in which the total pore volume is at least about 1.3 $cm^3/g$.

**3.** A composition of claims 1 or 2 which has an amorphous structure.

**4.** A composition of claims 1 to 3 which comprises one or more catalytically active agents.

**5.** A composition of claim 4 in which said catalytically active agent is chromium.

**6.** A composition of claim 5 which further comprises boron, silicon or titanium.

**7.** A composition of claims 4 to 6 which is capable of catalyzing the polymerization of large quantities of ethylene in short reaction times.

**Revendications**

**1.** Composition de phosphate d'aluminium amorphe et hautement poreuse dans laquelle le phosphore et l'aluminium sont présents suivant un rapport se situant dans l'intervalle 0,8 à 1 et qui présente une surface spécifique située dans l'intervalle 300 à 408 $m^2/g$ et un volume de pore total d'au moins 1 $cm^3/g$.

**2.** Composition suivant la revendication 1 dans laquelle le volume total de pore est au moins d'environ 1,3 $cm^3/g$.

**3.** Composition suivant la revendication 1 ou 2 qui présente une structure amorphe.

**4.** Composition suivant les revendications 1 à 3 qui comprend un ou plusieurs agents catalytiquement actifs.

**5.** Composition suivant la revendication 4 dans laquelle ledit agent catalytiquement actif est le chrome.

**6.** Composition suivant la revendication 5 qui comprend en outre du bore, du silicium et du titane.

**7.** Composition suivant les revendications 4 à 6 qui est capable de catalyser la polymérisation de grandes quantités d'éthylène en des temps de réaction courts.

**Patentansprüche**

**1.** Amorphe und stark poröse Aluminiumphosphatzusammensetzung, in der Phosphor und Aluminium in einem Verhältnis im Bereich von 0,8 bis 1,0 vorliegen, und die eine Oberfläche im Bereich von 300 bis 408 m$^2$/g und ein Poren-Gesamtvolumen von mindestens 1,0 cm$^3$/g aufweist.

**2.** Zusammensetzung nach Anspruch 1, in der das Poren-Gesamtvolumen mindestens etwa 1,3 cm$^3$/g beträgt.

**3.** Zusammensetzung nach den Ansprüchen 1 oder 2, welche eine amorphe Struktur aufweist.

**4.** Zusammensetzung nach den Ansprüchen 1 bis 3, welche ein oder mehrere katalytisch wirksame Agentien umfaßt.

**5.** Zusammensetzung nach Anspruch 4, bei der das katalytisch wirksame Agens Chrom ist.

**6.** Zusammensetzung nach Anspruch 5, die ferner Bor, Silicium oder Titan umfaßt.

**7.** Zusammensetzung nach den Ansprüchen 4 bis 6, welche in der Lage ist, die Polymerisation großer Mengen Ethylen in kurzen Reaktionszeiten zu katalysieren.